# EUROPEAN PATENT SPECIFICATION

(11) **EP 0 456 406 B1**
(45) Date of publication and mention of the grant of the patent: **07.02.1996**
(21) Application number: 91303954.1
(22) Date of filing: 01.05.1991
(51) Int. Cl.: C08L 23/12

(54) **Improved polypropylene process**
Verbessertes Verarbeitungsverfahren für Polypropylen
Procédé amélioré pour le moulage de polypropylène

(30) Priority: 02.05.1990 US 517793
(43) Date of publication of application: 13.11.1991
(73) Proprietor: SHELL OIL COMPANY, Houston Texas 77002 (US)
(72) Inventor: Wilpers, Dale J., Houston, Texas 77084 (US); Hwo, Charles C., Sugar Land, Texas 77478 (US)
(74) Representative: Cresswell, Thomas Anthony

(56) References cited:
- EP-A- 0 343 943

## Description

The present invention relates to a means for extruding polypropylene. More particularly, this invention relates to increasing polymer output in polypropylene processing by incorporating a high melt index polybutylene.

Blends of polypropylene and polybutylene have been disclosed, e.g. see U.S. 3,900,534. EP-A-0343943 is directed at specific combinations of polymers of but-1-ene and propylene which give rise, on moulding, to shaped articles and film having improved properties, especially stretch properties. However, the incorporation of high melt index polybutylene polymers to improve extrusion efficiency has not been discussed.

The present invention provides the use of a high melt index (or low molecular weight) polybutylene, said polybutylene being used in an amount from 0.2 to 20% by weight of the mixture of polybutylene and polypropylene for improving the extrusion efficiency of polypropylene.

Higher polymer toughness and good melt strength are attributes of higher molecular weight polypropylene grades. The melt processing machine outputs tend to be inversely related to toughness and melt strenght. With the addition of a small amount of high melt index polybutylene, polypropylenes with high toughness and strength when molded can be processed easily. The improved method uses less power and significantly increases polymer throughput without significantly diminishing the properties of the polypropylene. The high melt index polybutylene acts as a lubricant.

The amount of polybutylene added is from 0.2% to 20%, preferably from 1% to 10%, and most preferably from 2% to 7% by weight of the resulting mixture, and it is preferably dry blended with the propylene in powder form, prior to extrusion. The high melt index polybutylene referred to herein is at least one butene-1 polymer generally containing from 90%, preferably from 95%, and more preferably from 97% by weight of isotactic portions. For example, isotactic poly-1-butenes having a low molecular weight, e.g. less than about 280,000 as determined by solution viscosity in "Decalin" (decahydronaphthalene) may be used. Suitable poly-1-butenes have a density of from 0.900 to 0.925, preferably from 0.905 to 0.920 and most preferably from 0.910 to 0.915. The poly-1-butenes used have melt indices from 10 to 1000, more preferably from 20 to 650, and most preferably from 100 to 500, as determined by ASTM D-1238 Condition E, at 190°C. The intrinsic viscosity of the polybutylene generally ranges from 0.03 to 0.20, preferably from 0.06 to 0.11 at 130°C.

A butene-1 polymer (PB) usable herein is either a butene-1 homopolymer or a copolymer. If a butene-1 copolymer is used, the non-butene comonomer content is preferably from 1 to 30 mole % of either ethylene, propylene, or an alpha olefin having from 5 to 8 carbon atoms.

Suitable poly-1-butenes can be obtained, for example, in accordance with Ziegler-Natta low-pressure polymerization of butene-1, e.g. by polymerizing butene-1 with catalysts of TiCl₃ or TiCl₃.AlCl₃ and Al(C₂H₅)₂Cl at temperatures of 10-50°C, preferably 20-40°C, e.g. according to the process described in DE-A-1,570,353. High melt indices are obtainable by further processing the polymer by peroxide cracking. The polybutylene may be modified to increase surface activity by reaction with, for example, maleic anhydride.

Duraflex® DP0800, a developmental poly-1-butene polymer produced by Shell Chemical Company, of Houston, Texas is a particularly suitable polymer. This novel polymer is a homopolymer with a melt index of 200 g/10 min. at 190°C and a molecular weight of 108,000.

DURAFLEX® PB0400, a commercially available poly-1-butene polymer produced by Shell Chemical Company, is another suitable polymer. The polymer is a homopolymer with a melt index of 20 g/10 min. at 190°C and 49 g/10 min. at 210°C and a molecular weight of 202,000.

The polypropylene used in the present invention is any crystallizable polypropylene. Said polypropylene can be prepared by homopolymerizing propylene irrespective of the method used, providing that a crystallizable polyproylene is formed. Preferred polypropylenes are substantially isotactic polypropylenes prepared by the Ziegler/Natta or Mgcl₂-supported catalyst polymerization process.

The propylene polymer usable herein can be either a propylene homopolymer or copolymer. If a propylene copolymer is used, it may be a random or a block copolymer with a comonomer content of preferably from 1 to 30 mole % of either ethylene, butene, or an alpha olefin having from 5 to 8 carbon atoms.

Suitable propylene polymers preferably have a melt index of less than 60, more preferably less than 20, in particular from 1 to 15, and most preferably less than 10, as measured by ASTM D-1238, Condition L at 230°C. A particularly suitable propylene has a melt index of 3.2 and is available from Shell Chemical Company, of Houston Texas as PP5C08.

A preferred method uses 5% by weight of a high melt index butene-1 homopolymer with a melt index equal to or greater than 20 and 95% by weight of, e.g. a propylene homopolymer.

Blending of the components can occur by, for example, dry tumble blending, masterbatch, or melt compounding techniques. The method of combining the ingredients of the formulation is important. For example, in most cases, it is desirable to use the least amount of energy to merge the components into an effective blend. Therefore the preferred method of blending is dry blending the components in a powder form.

### EXAMPLES

Blends were prepared from PP5C08, a polypropylene homopolymer having a melt index of 3.2, available from Shell Chemical Co. of Houston, Texas and Duraflex® DP0800 polybutylene and Duraflex® PB0400 polybutylene.

The typical physical properties of the high index polybutylene (DP0800) are listed below.

**TABLE I**

| Typical Physical Properties of DP0800 Polybutylene | | | |
|---|---|---|---|
| | ASTM | Polybutylene DP0800 Units | |
| | Test Method | Metric | English |
| Melt Index @ 190°C | D1238 "E" | 200g/10min | - |
| @ 230°C | D1238 "L" | 490g/10min | - |
| Density | D1505 | 0.915g/cm³ | 57.1 lb/ft |
| Tensile strength @ yield | D638 | 13.8 MPa | 2000 psi |
| Tensile strength @ break | D638 | 29.0 MPa | 4200 psi |
| Elongation at break | D638 | 350% | - |
| Modulus of elasticity | D638 | 241 MPa | 35000 psi |
| Hardness, Shore | D2240 | 55 D Scale | - |
| Brittleness temperature | D746 | -18°C | 0°F |
| Melting point range | DSC | 124-126°C | 225-259°F |
| Soft point, Vicat | D1525 | 116°C | 241°F |
| Thermal conductivity at 25°C (77°F) | C177 | 16Kcal/m/hr/°C/cm | 1.25Btu/ft/hr/°F/in |

### Example I

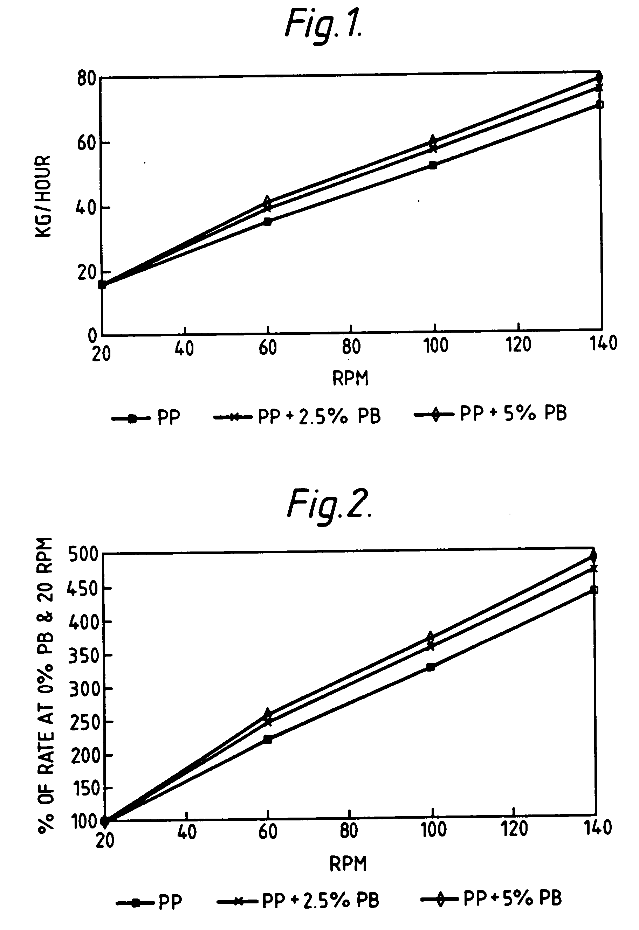

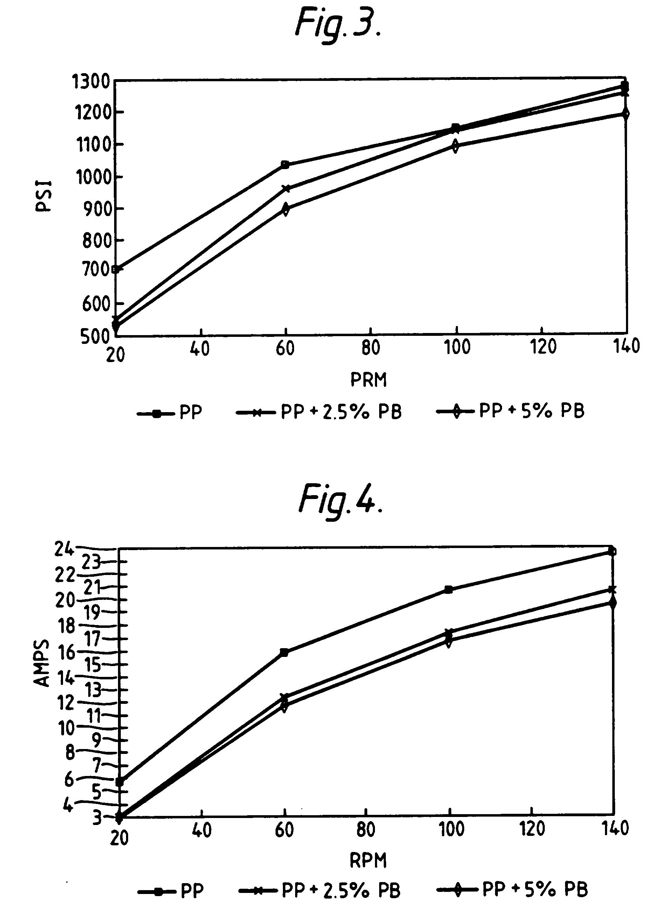

PP5C08 polypropylene was dry blended with Shell Duraflex DP0800 high melt index polybutylene in the proportions described below. The blends were then extruded using a 6.4cm (2½ inch) Egan single screw extruder with a L/D of 24, a compression ratio of 3:1, with a slot die. PP5C08 was used as the control. The extruder temperatures were, Zone 1 - 210°C, Zone 2, 3, 4 and 5 (die) - 230°C. The results are shown in Table II and plotted in Figures 1, 2, 3 and 4. For the three mixtures, Figure 1 shows a plot of throughput rate in kg/hr against screw speed in rpm; Figure 2 shows a plot of throughput rate measured as % of rate at 0% polybutylene and at 20 rpm against screw speed in rpm; Figure 3 shows a plot of extruder back pressure in psi (conversions into MPa are given in Table II) against screw speed in rpm; and Figure 4 shows a plot of power consumption in amps against screw speed in rpm. Subsequent improvements can be seen in back pressure, power consumption, and throughput for both blends.

**TABLE II**

| | | BACK PRESSURE | | CURRENT | THROUGHPUT |
|---|---|---|---|---|---|
| | RPM | MPa | (psi) | AMP | kg/hr |
| PP | 20 | 4.877 | (707.4) | 5.71 | 16 |
| PP + 2.5% PB | 20 | 3.7827 | (550.59) | 3.04 | 16 |
| PP + 5.0%PB | 20 | 3.665 | (531.5) | 3.1 | 16 |
| | | | | | |
| PP | 60 | 7.13525 | (1034.88) | 15.85 | 35 |
| PP + 2.5% PB | 60 | 6.6340 | (962.18) | 12.3 | 39 |
| PP + 5.0% PB | 60 | 6.1903 | (897.82) | 11.66 | 41 |
| | | | | | |
| PP | 100 | 7.88305 | (1143.31) | 20.59 | 52 |
| PP + 2.5% PB | 100 | 7.84438 | (1137.73) | 17.33 | 57 |
| PP + 5.0% PB | 100 | 7.52949 | (1092.06) | 16.77 | 59 |
| | | | | | |
| PP | 140 | 8.79330 | (1275.36) | 23.54 | 70 |
| PP + 2.5% PB | 140 | 8.63851 | (1252.91) | 20.53 | 75 |
| PP + 5.0% PB | 140 | 8.18153 | (1186.63) | 19.51 | 78 |

### Example II

High melt index PB0400 polybutylene (20 MI) and DP0800 polybutylene (200 MI) were dry blended with PP5C08 (3.2 MI) polypropylene homopolymer to evaluate throughput, back pressure and power improvements.

The two blends and a polypropylene control were processed using the Egan 6.4cm (2½ inch) extruder equipped with a slot die to evaluate polybutylene as a means of improving extruder throughput of film grade polypropylene homopolymer and to evaluate film quality.

The Egan extruder has a double wave (barrier) screw with a 3:1 compression ratio and a 24:1 L/D ratio. The screw speed was held constant at 60 rpm and melt temperature was 230°C. The material was collected for two five minute periods for each sample. Back pressure, power, and throughput were measured. The results showed that both high melt index polybutylene blends gave the desired improvements.

PP5C08 polypropylene was the control. The polypropylene was modified with 5.0w% PB0400 polybutylene and 5.0w% DP0800 polybutylene in separate blends.

The sample ingredients and extrusion results are listed below in Table III.

**TABLE III**

| SX | RPM | BACK PRESSURE MPa (PSI) | PERCENT CHANGE | POWER AMPS | PERCENT CHANGE | THROUGHPUT GMS/10 MIN | PERCENT CHANGE |
|---|---|---|---|---|---|---|---|
| 1) PP5C08 (Control) | 60 | 17.26 (2504) | -- | 16.5 | -- | 2510 | -- |
| 2) PP5C08 + 5.0% PB0400 | 60 | 17.37 (2519) | +0.6 | 15.0 | -9.0 | 2825 | +12.6 |
| 3) PP5C08 + 5.0% DP0800 | 60 | 16.40 (2379) | -5.0 | 12.9 | -21.8 | 2872 | +14.4 |

Monolayer film was collected for Samples 1 and 3 and was tested for haze, clarity and gloss.

The addition of high melt index polybutylene produced significant increases in throughput and significant decreases in power consumption. The back pressure for the blend containing PB0400 had not significantly changed, however the blend containing DP0800 showed a decreased back pressure.

**TABLE IV**

| SAMPLE NO. | HAZE | CLARITY | GLOSS |
|---|---|---|---|
| 1 | 12.4 | 16.7 | 57.1 |
| 3 | 8.1 | 22.4 | 69.5 |

The blend had consistently better optical properties showing less haze, higher clarity and more gloss.

## Claims

1. Use of polybutylene in improving the extrusion efficiency of polypropylene, said polybutylene being used in an amount from 0.2% to 20% by weight of the mixture of polybutylene and polypropylene, and having a melt index of from 10 to 1000 as determined by ASTM-D-1238 Condition E, at 190°C.

2. Use according to claim 1 wherein the polybutylene has a melt index of from 20 to 650.

3. Use according to claim 2 wherein the polybutylene has a melt index from 100 to 500.

4. Use according to any one of the preceding claims wherein the polybutylene is used in an amount from 1% to 10% by weight of the mixture.

5. Use according to claim 4 wherein the amount of polybutylene is from 2% to 7% by weight of the mixture.

6. Use according to any one of the preceding claims wherein the polybutylene is a butene-1 homopolymer or a butene-1 copolymer comprising from 1 to 30 mole% of an alpha-olefin having from 2 to 8 carbon atoms.

7. Use according to any one of the preceding claims wherein the polypropylene is a polypropylene homopolymer or a polypropylene copolymer comprising from 1 to 30 mole% of an alpha-olefin having from 3 to 8 carbon atoms.

8. Use according to any one of the preceding claims wherein the polypropylene has a melt index of less than 20.

9. Use according to claim 9 wherein the polypropylene has a melt index of less than 10.

10. Use according to any one of the preceding claims wherein the mixture is shaped.

## Patentansprüche

1. Verwendung von Polybutylen zur Verbesserung der Extrusionseffizienz von Propylen, wobei das Polybutylen in einer Menge von 0,2 bis 20 Gew.-%, bezogen auf das Gemisch aus Polybutylen und Polypropylen verwendet wird und einen Schmelzindex von 10 bis 1000, bestimmt nach ASTM-D-1238, Bedingung E, bei 190°C aufweist.

2. Verwendung nach Anspruch 1, wobei das Polybutylen einen Schmelzindex von 20 bis 650 aufweist.

3. Verwendung nach Anspruch 2, wobei das Polybutylen einen Schmelzindex von 100 bis 500 aufweist.

4. Verwendung nach einem der vorangehenden Ansprüche, wobei das Polybutylen in einer Menge von 1 bis 10 Gew.-%, bezogen auf das Gemisch, verwendet wird.

5. Verwendung nach Anspruch 4, wobei die Menge an Polybutylen 2 bis 7 Gew.-%, bezogen auf das Gemisch, beträgt.

6. Verwendung nach einem der vorangehenden Ansprüche, wobei das Polybutylen ein Buten-1-homopolymer oder ein Buten-1-copolymer, umfassend 1 bis 30 mol-% eines α-Olefins mit 2 bis 8 Kohlenstoffatomen, ist.

7. Verwendung nach einem der vorangehenden Ansprüche, wobei das Polypropylen ein Polypropylenhomopolymer oder ein Polypropylencopolymer ist, umfassend 1 bis 30 mol-% eines α-Olefins mit 3 bis 8 Kohlenstoffatomen.

8. Verwendung nach einem der vorangehenden Ansprüche, wobei das Polypropylen einen Schmelzindex von weniger als 20 aufweist.

9. Verwendung nach Anspruch 8, wobei das Polypropylen einen Schmelzindex von weniger als 10 aufweist.

10. Verwendung nach einem der vorangehenden Ansprüche, wobei das Gemisch geformt wird.

## Revendications

1. Utilisation de polybutylène pour améliorer l'efficacité de l'extrusion du polypropylène, dudit polybutylène, utilisé en une quantité de 0,2 à 20% en poids du mélange de polybutylène et de polypropylène, et ayant un indice de fluidité à chaud compris entre 10 et 1000, qui est déterminé selon la norme ASTM-D-1238, Condition E à 190°C.

2. Utilisation selon la revendication 1, dans laquelle le polybutylène a un indice de fluidité à chaud compris entre 20 et 650.

3. Utilisation selon la revendication 2, dans laquelle le polybutylène a un indice de fluidité à chaud compris entre 100 et 500.

4. Utilisation selon l'une des précédentes revendications, dans laquelle le poybutylène est utilisé en une quantité de 1% à 10% en poids du mélange.

5. Utilisation selon la revendication 4, dans laquelle la quantité de polybutylène est comprise entre 2% et 7% en poids du mélange.

6. Utilisation selon l'une des précédentes revendications, dans laquelle le poybutylène est un homopolymère de butène-1 ou un copolymère de butène-1, contenant 1 à 30% en moles d'une α-oléfine comportant 2 à 8 atomes de carbone.

7. Utilisation selon l'une des précédentes revendications, dans laquelle le polypropylène est un homopolymère de polypropylène ou un copolymère de polypropylène, contenant 1 à 30% en moles d'une α-oléfine comportant 3 à 8 atomes de carbone.

8. Utilisation selon l'une des précédentes revendications, dans laquelle le polypropylène a un indice de fluidité à chaud inférieur à 20.

9. Utilisation selon la revendication 8, dans laquelle le polypropylène a un indice de fluidité à chaud inférieur à 10.

10. Utilisation selon l'une des précédentes revendications, dans laquelle le mélange est façonné.
